# EUROPEAN PATENT APPLICATION

(11) **EP 0 748 018 A2**
(43) Date of publication of application: **11.12.1996**
(21) Application number: 96304101.7
(22) Date of filing: 05.06.1996
(51) Int. Cl.: H02B 1/42, H01H 1/58

(54) **Adaptor for circuit breaker**

(30) Priority: 05.06.1995 GB 9511278; 15.06.1995 GB 9512220
(71) Applicant: SQUARE D COMPANY, Palatine, IL 60067 (US)
(72) Inventor: Cole, Anthony Robert, Swindon,Wiltshire SN5 8NQ (GB); Ball,Keith Wray, Swindon,Wiltshire (GB); Prudie,Andrew, Swindon,Wiltshire SN2 1NG (GB)
(74) Representative: Sorrell, Terence Gordon

(57) **Abstract**

1. An adaptor for a circuit breaker which comprises an electrically conductive support member (10) formed to be attachable to a circuit breaker (16), having a portion (10b, 12a) to be electrically connectable within a cable entry (14) of the circuit breaker (16), and an electrically conductive connector member (11, 12), carried by the support member (10) and electrically connected thereto, or integrally formed therewith (12, 12a). An electrically insulative cover member (13) may be provided engagable with the opposed sides of the circuit breaker (16) to cover the support member (10) and cable entry (14) at the edge of the circuit breaker (16), in use.

## Description

The invention relates to circuit breakers and to adaptors for circuit breakers, more particularly, although not exclusively, to miniature circuit breakers (m.c.b's).

Standard m.c.b's at the present have screw terminals for both the incoming and outgoing electrical connections. However, load centres and consumer units, for example as disclosed in our European patent no. 0,325,370, have provisions for m.c.b's to plug onto bus bars to provide the incoming electrical connection thereto, other prior load centres and consumer units have provision for finger connection to m.c.b's.

It is an object of the present invention to provide a simple and inexpensive adaptor for converting standard m.c.b's for plug on or plug in usage.

According to one aspect of the invention there is provided an adaptor for a circuit breaker which comprises an electrically conductive support member formed to be attachable to a circuit breaker, having a portion to be electrically connectable within a cable entry of the circuit breaker, and an electrically conductive connector member, carried by the support member and electrically connected thereto, or integrally therewith.

The support member may comprise a generally U-shaped strip member, one arm of which is locatable beneath the circuit breaker, the other arm is locatable within the cable entry and the body portion is formed to lie along an edge of the circuit breaker, in use.

The connector member may comprise a resilient clip member, carried on said one arm of the support member, engagable by plugging onto a bus bar, in use.

Alternatively, the connector member may comprise a plug-in member carried on the body portion of the support member.

In a further alternative arrangement the support member may comprise a generally L-shaped strip member, one arm of which is locatable within the cable entry of the circuit breaker and the other arm is formed to lie along the adjacent edge thereof and comprises a plug-in member as the connector member.

An adaptor as defined in any of the next preceding five paragraphs may be provided in combination with an electrically insulative cover member engagable with the opposed sides of the circuit breaker to cover the support member and cable entry at the edge of the circuit breaker, in use.

Alternatively, at least the body portion of the support member may be coated with a layer of electrically insulating material which may comprise a synthetic plastics powder coating.

The support and connector members may be formed of copper and at least the portion of the support member connectable within the cable entry and the connector member may be plated.

According to a further aspect of the invention there is provided a circuit breaker having an adaptor, as defined in any one of the next preceding eight paragraphs, located thereon.

The foregoing and further features of the invention may be more readily understood from the following description of some preferred embodiments thereof, by way of example, with reference to the accompanying drawings, in which:-
Figs 1A and 1B show side and end elevational views respectively, of an adaptor for an m.c.b.;
Figs 2 A and 2B show side and end elevational views respectively, of an alternative adaptor for an m.c.b.;
Figs 3A and 3B show side and end elevational views respectively, of a further alternative adaptor for an m.c.b.;
Figs 4A and 4B show side and end elevational views respectively of a cover member for use with the adaptors of Figs 1, 2 and 3;
Figs. 5A and 5B show side and end elevational views respectively of a standard, prior art, m.c.b;
Figs 6A and 6B are similar views to Figs 5A and 5B with the adaptor of Figs 1A and 1B attached thereto;
Figs 7A and 7B are similar views to Figs 6A and 6B with the cover member of Figs 4A and 4B attached thereto;
Figs 8A and 8B are similar views to Figs 5A and 5B with the adaptor of Figs 2A and 2B attached thereto,
Figs 9A and 9b are similar views to Figs 8A and 8B with the cover member of Figs. 4A and 4B attached thereto;
Figs 10A and 10B are similar views to Figs 8A and 8B with the adaptor of Figs. 3A and 3B attached thereto, and
Figs 11A and 11B are similar views to Figs 10A and 10B with the cover member of Figs 4A and 4B attached thereto.

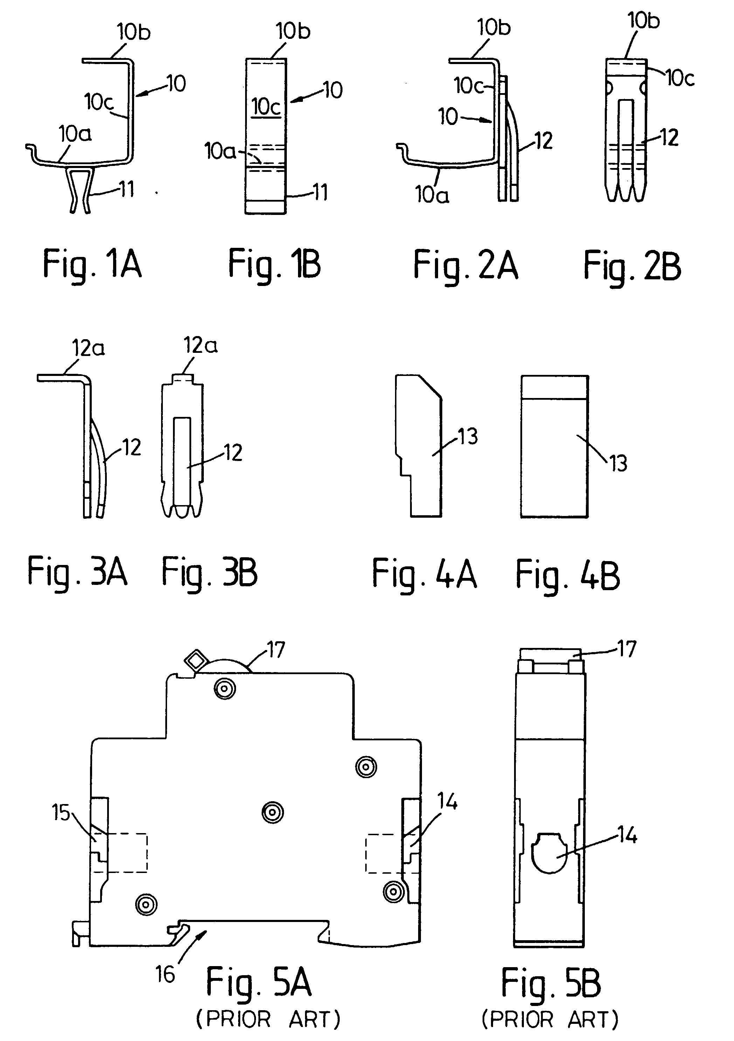

Referring now firstly to Figs 1A and 1B of the drawings there is shown an adaptor for an m.c.b which comprises a support member 10 with a connector member 11 carried thereby. The support member 10 is formed from a strip of electrically conductive material, such as copper, formed into a generally U-shaped configuration. One arm 10a of member 10 is formed to be locatable beneath an m.c.b , the other arm 10b is formed to be attachable within a standard cable connection of the m.c.b., and retained by tightening the screw, and the body portion 10c is formed to lie along the edge of the m.c.b. beneath the cable termination.

The connector member 11 is formed from a strip of electrically conductive material, such as copper, to provide a resilient necked clip for engaging, by plugging on to a bus bar. The member 11 is electrically and mechanically connected beneath the arm 10a of member 10 by any suitable means, such as spot welding, soldering or rivetting.

Referring now to Figs 2A and 2B there is shown an adaptor similar to that of Figs 1A and 1B but with connector member 11 replaced by a connector member 12 which has the form of a plug-in multi finger connector similarly attached to the outer surface of body portion 10c of member 10. Connector members 11 and 12 and at least the arm 10b of member 10 may be tin plated to improve electrical connection thereto without corrosion.

Referring now to Figs 3A and 3B there is shown an adaptor similar to that of Figs 2A and 2B but in this embodiment the support member 10 is dispensed with and the connector member 12 has an arm 12a, formed integrally therewith, to replace arm 10b and be locatable in the cable connection of the m.c.b.

Referring now to Figs 4A and 4B there is shown a cover member 13 formed of electrically insulating material such as synthetic plastic material and formed so as to be engagable with the opposed sides of an m.c.b fitted with an adaptor as shown in Figs 1, 2 or 3 to locate over the adaptor and provide finger safety. The cover member 13 may be adhered to the casing of the m.c.b., for example by being ultrasonically welded thereto, more particularly when being used to cover an adaptor of Figs 3A and 3B to provide additional mechanical support therefor as well as providing finger safety.

Alternatively the adaptor could be provided with a layer of electrically insulating material, such as a synthetic plastics powder coating, to provide finger safety.

Referring now to Figs 5A and 5B there is shown a standard, prior art, m.c.b. having incoming and outgoing screw terminals 14 and 15 respectively at each edge thereof, clip formations 16 at the base thereof and a reset switch 17 at the top thereof.

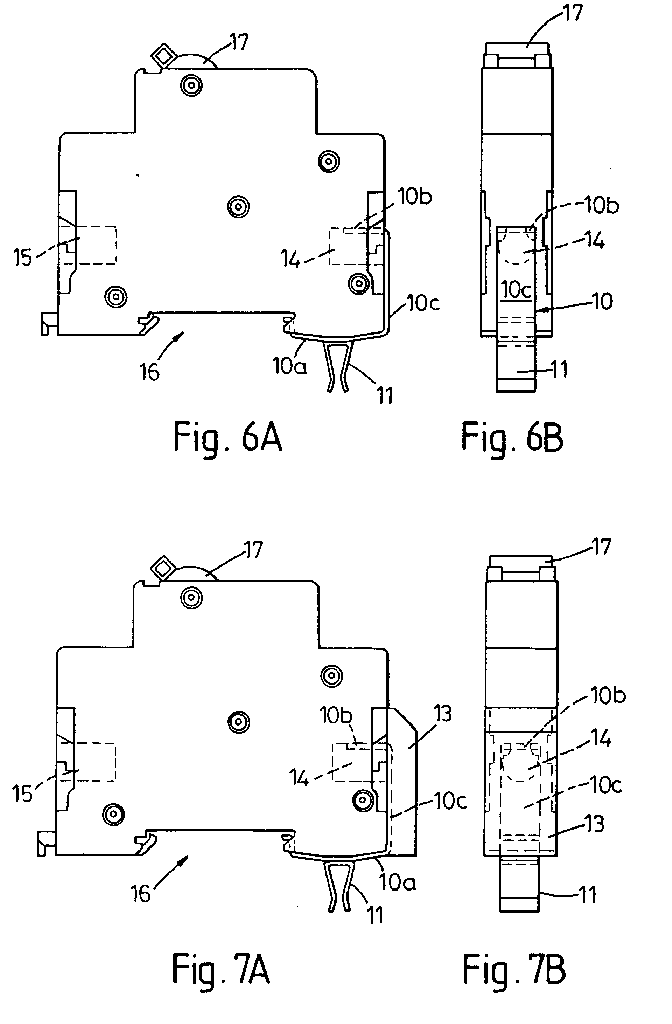

Figs 6A and 6B show the m.c.b. of Figs 5A and 5B with the adaptor of Figs 1A and 1B attached thereto and Figs 7A and 7B show the m.c.b. of Figs 6A and 6B with the cover member of Figs 4A and 4B attached thereto.

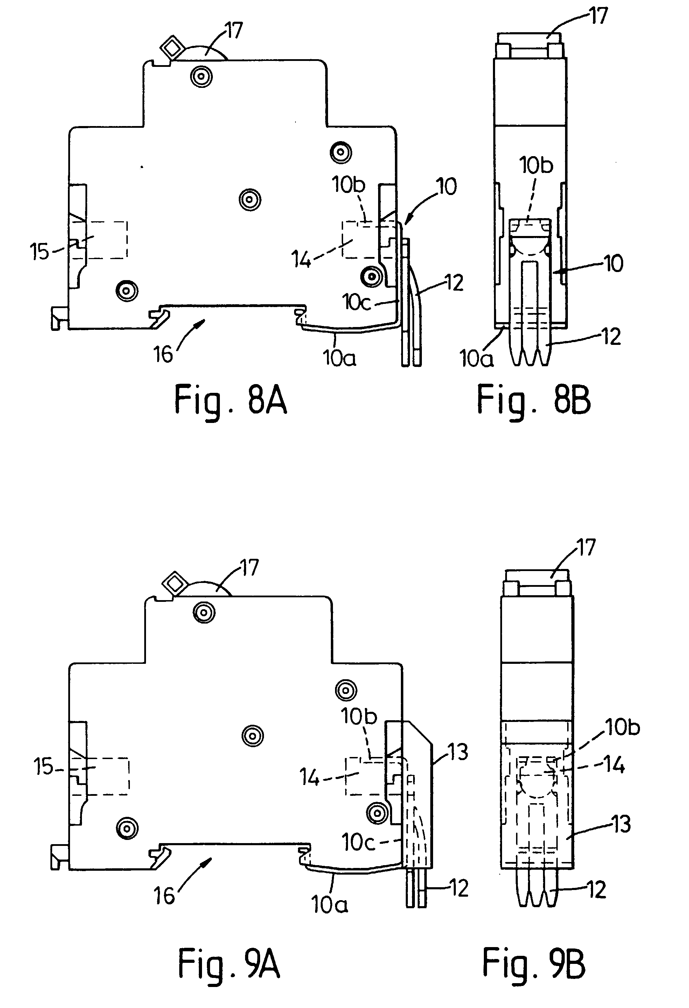

Figs 8A and 8B show the m.c.b. of Figs 5A and 5B with the adaptor of Figs 2A and 2B attached thereto and Figs 9A and 9B show the m.c.b. of Figs 8A and 8B with the cover member of Fig 4A and 4B attached thereto.

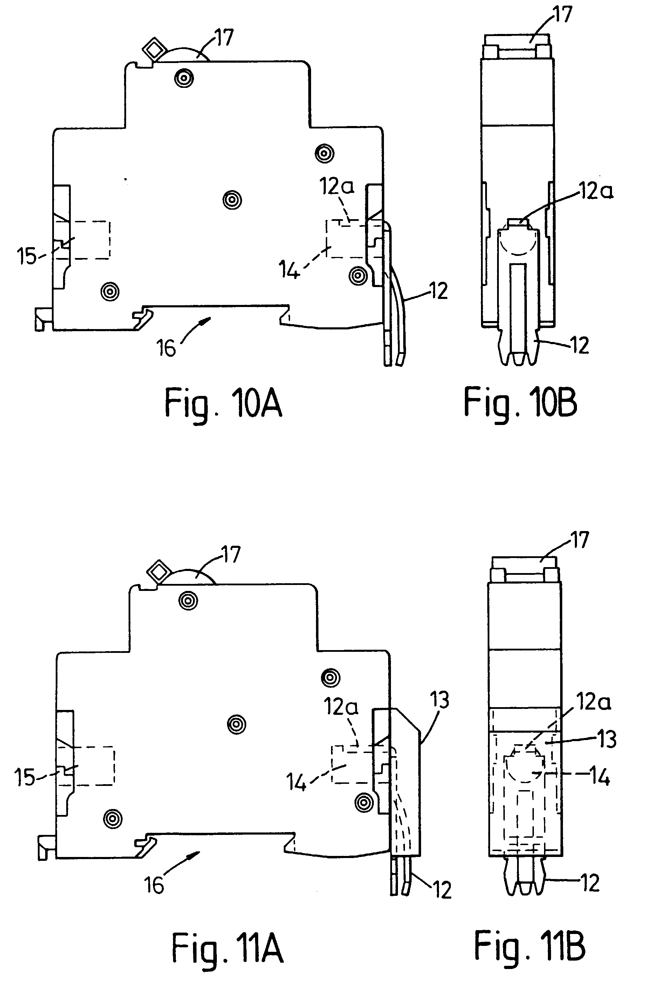

Figs 10A and 10B show the m.c.b. of Figs 5A and 5B with the adaptor of Figs 3A and 3B attached thereto and Figs 11A and 11B shows the m.c.b. of Figs 10A and 10B with the cover member of Figs 4A and 4B attached thereto.

Hence there are shown simple and inexpensive adaptors for converting standard m.c.b.'s with screw terminal connections to provide plug on or plug-in incoming electrical connections. Although m.c.b.'s only have been shown, similar adaptors could be provided for other circuit breakers.

## Claims

1. An adaptor for a circuit breaker which comprises an electrically conductive support member formed to be attachable to a circuit breaker, having a portion to be electrically connectable within a cable entry of the circuit breaker, and an electrically conductive connector member, carried by the support member and electrically connected thereto, or integrally formed therewith.

2. An adaptor as claimed in claim 1 wherein the support member comprises a generally U-shaped strip member, one arm of which is locatable beneath the circuit breaker, the other arm is locatable within the cable entry and the body portion is formed to lie along an edge of the circuit breaker, in use.

3. An adaptor as claimed in claim 2 wherein the connector member comprises a resilient clip member, carried on said one arm of the support member, engagable by plugging onto a bus bar, in use.

4. An adaptor as claimed in claim 2 wherein the connector member comprises a plug-in member carried on the body portion of the support member.

5. An adaptor as claimed in claim 1 wherein the support member comprises a generally L-shaped strip member, one arm of which is locatable within the cable entry of the circuit breaker and the other arm is formed to lie along the adjacent edge thereof and comprises a plug-in member as the connector member.

6. An adaptor as claimed in any preceding claim in combination with an electrically insulative cover member engagable with the opposed sides of the circuit breaker to cover the support member and cable entry at the edge of the circuit breaker, in use.

7. An adaptor as claimed in any one of the claims 2 to 4 inclusive, wherein at least the body portion of the support member is coated with a layer of electrically insulating material.

8. An adaptor as claimed in claim 6 wherein the layer of electrically insulating material is formed from a synthetic plastics powder coating.

9. An adaptor as claimed in any preceding claim wherein the support and connector members are formed of copper.

10. An adaptor as claimed in claim 9 wherein at least the portion of the support member connectable within the cable entry and the connector member are plated.

11. A circuit breaker having an adaptor as claimed in any preceding claim locaced thereon.

12. A circuit breaker having an adaptor as claimed in claim 5 located thereon in combination with a cover member as claimed in claim 6 located thereon.

13. A circuit breaker as claimed in claim 12 wherein the cover member is ultrasonically welded to the outer case of the circuit breaker.
